(19) Europäisches Patentamt
European Patent Office
Office européen des brevets

(11) **EP 1 930 733 A1**

(12) **EUROPEAN PATENT APPLICATION**

(43) Date of publication:
**11.06.2008 Bulletin 2008/24**

(51) Int Cl.:
*G01P 21/00* (2006.01)       *B60W 40/10* (2006.01)
*B60W 40/08* (2006.01)

(21) Application number: **07122060.2**

(22) Date of filing: **03.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **07.12.2006 JP 2006330140**

(71) Applicant: **Nissan Motor Co., Ltd.**
**Kanagawa 221-0023 (JP)**

(72) Inventors:
• **Suzuki, Tomoyuki**
  **Atsugi-shi, Kanagawa 243-0123 (JP)**
• **Ochiai, Tatsuo**
  **Atsugi-shi, Kanagawa 243-0123 (JP)**
• **Takahashi, Seiichiro**
  **Atsugi-shi, Kanagawa 243-0123 (JP)**

(74) Representative: **Holmes, Matthew William et al**
**Nissan Motor Manufacturing (UK) Ltd**
**Intellectual Property Department**
**Nissan Technical Centre Europe**
**Cranfield Technology Park**
**Cranfield, Bedfordshire MK43 0DB (GB)**

(54) **Acceleration Detection Device and Acceleration Detection Method**

(57) An acceleration detection device for detecting acceleration of a vehicle is provided with a calculation unit and a correcting unit. The calculation unit calculates an averaged acceleration sensor output value every time the vehicle travels a prescribed distance based on detected acceleration sensor output values. The correcting unit corrects a current acceleration sensor output value based on of the averaged acceleration sensor output value. Thus, the acceleration detection device aids in correcting for errors by an acceleration sensor due to the effects of sloping roads and traffic conditions.

FIG. 1

EP 1 930 733 A1

## Description

The present invention generally relates to the technological field of acceleration detection devices and acceleration detection methods and particularly, but not exclusively, to devices and methods for correcting an error in a detected acceleration of a vehicle. Aspects of the invention relate to an apparatus, to a device, to a method and to a vehicle.

In conventional acceleration detection devices, a zero point correction of an acceleration sensor is carried out by averaging detected acceleration values each time that the vehicle stops, and adding or subtracting this average value (drift from the zero point of the acceleration sensor) to or from the current detected acceleration value (see for example, Japanese Laid-Open Patent Application No. 7-159438). Thus, the zero point correction aids in eliminating the effect of a sloping road on the acceleration sensor.

However, it has been discovered that since the conventional technology mentioned above employs detected acceleration values taken when the vehicle is stopped, a problem may arises in that it will not be possible to detect correctly drift in instances where there are frequent stops on sloping roads, such as where the parking space of the home is on an incline, for example. Thus, the precision of zero point correction may be poor.

It is an aim of the invention to address this issue and to improve upon known technology. Embodiments of the invention may provide a device and a method which improves the accuracy for detecting acceleration. Other aims and advantages of the invention will become apparent from the following description, claims and drawings.

Aspects of the invention therefore provide an apparatus, a method and a vehicle as claimed in the appended claims.

According to another aspect of the invention for which protection is sought there is provided an acceleration detection device for detecting acceleration of a vehicle, comprising a calculation unit that calculates an averaged acceleration sensor output value every time the vehicle travels a prescribed distance based on detected acceleration sensor output values and a correcting unit that corrects a current acceleration sensor output value based on of the averaged acceleration sensor output value.

In an embodiment, the calculating unit is a drift amount calculating unit in which the averaged acceleration sensor output value corresponds to a drift amount of the detected acceleration sensor output values from a zero point and the correcting unit is further configured to correct the current acceleration sensor output value relative to the zero point based on the amount drift.

In an embodiment, the drift calculation unit is further configured to calculate the drift amount as a weighted sum of the current acceleration sensor output value and the drift amount that was previously calculated.

In an embodiment, the drift calculation unit is further configured to set a weighting coefficient of the current acceleration sensor output value to a value that is less than the weighting coefficient of a previous value of the drift amount that was previously calculated.

In an embodiment, the drift calculation unit is further configured to set the weighting coefficient to a smaller value as the prescribed distance decreases.

In an embodiment, the drift calculation unit configured to calculate the drift amount using: $y = (1 - a) \times y(-1) + a \times u$, where value "u" corresponds to the current acceleration sensor output value; value "a" corresponds to the weighting coefficient with $a \ll 1$, and value "y(-1)" corresponds to the previous value of the drift amount.

According to a further aspect of the invention for which protection is sought there is provided an acceleration detection device for detecting acceleration of a vehicle, comprising calculation means for calculating an averaged acceleration sensor output value every time the vehicle travels a prescribed distance based on detected acceleration sensor output values and correcting means for correcting a current acceleration sensor output value based on of the averaged acceleration sensor output value.

According to a still further aspect of the invention for which protection is sought there is provided an acceleration detection method comprising calculating an averaged acceleration sensor output value every time the vehicle travels a prescribed distance based on detected acceleration sensor output values and correcting a current acceleration sensor output value based on of the averaged acceleration sensor output value.

For example, an acceleration detection device for detecting acceleration of a vehicle may comprise a calculation unit and a correcting unit. The calculation unit calculates an averaged acceleration sensor output value every time the vehicle travels a prescribed distance based on detected acceleration sensor output values. The correcting unit corrects a current acceleration sensor output value based on of the averaged acceleration sensor output value. Thus, the acceleration detection device aids in correcting for errors by an acceleration sensor due to the effects of sloping roads and traffic conditions

Within the scope of this application it is envisaged that the various aspects, embodiments, examples, features and alternatives set out in the preceding paragraphs, in the claims and/or in the following description and drawings may be taken individually or in any combination thereof.

The present invention will now be described, by way of example only, with reference to the accompanying drawings in which:

Figure 1 is a schematic system diagram of a vehicle drive train with a neutral control device equipped with an acceleration detection device in accordance with one embodiment;

Figure 2 is a control block diagram depicting a configuration of the acceleration detection device housed in the engine controller (ECU) in accordance with the illustrated embodiment of Figure 1;

Figure 3 is a flow chart depicting a zero point correction control processing that is executed in the acceleration detection device in accordance with the illustrated embodiment of Figure 1;

Figure 4 is an illustration depicting the relationship between the G sensor output value and the drift amount when the weighting coefficient "a" is varied;

Figure 5 is a waveform diagram of a G sensor output depicting a method for calculating the drift amount by averaging and correcting the G sensor output values;

Figure 6A is a diagrammatic illustration of a vehicle traveling up a sloped road during a morning journey with traffic congestion;

Figure 6B is a diagrammatic illustration of a vehicle traveling down a sloped road during an evening journey without traffic congestion;

Figure 7 is a waveform diagram of a G sensor output depicting problems that arise with the zero point correction using time sampling; and

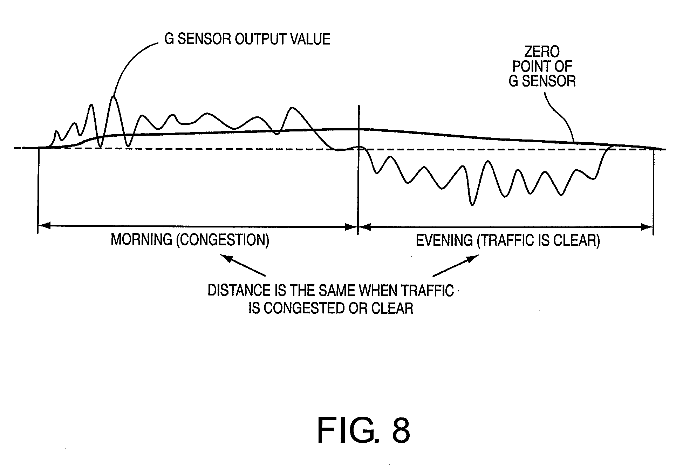

Figure 8 is a waveform diagram of the G sensor output depicting the operation of the zero point correction using distance sampling in accordance with illustrated embodiment of Figure 1.

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

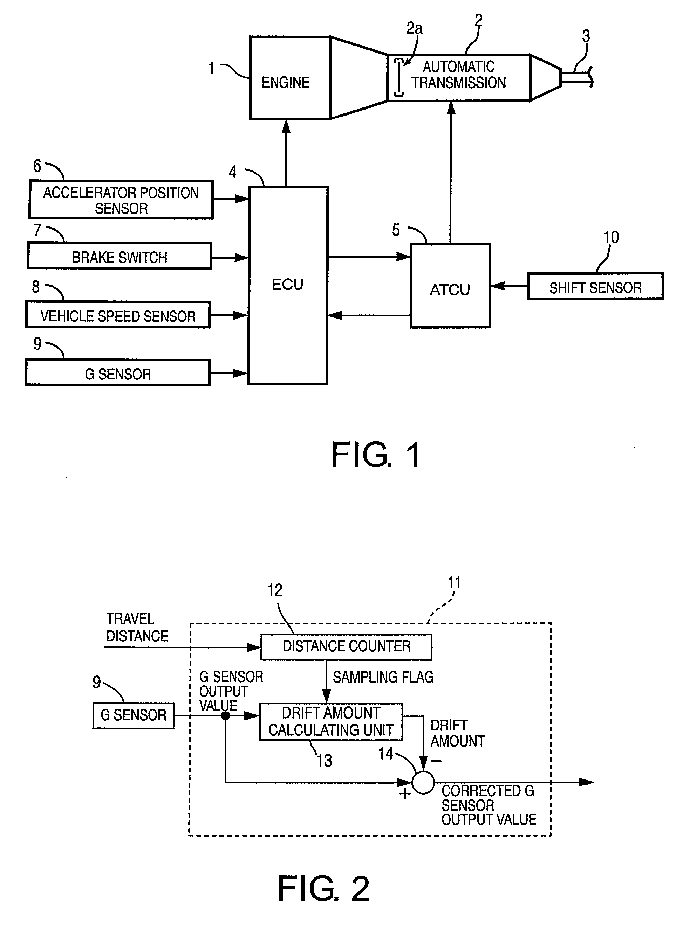

Referring initially to Figure 1, a system configuration diagram is illustrated depicting a vehicle drive train with a neutral control device embodying the acceleration detection device in accordance with a first embodiment of the present invention. The vehicle drive train basically includes an on-board engine 1, an automatic transmission 2 coupled to the engine 1 and an output shaft 3 coupled to the automatic transmission 2. The rotational output of the engine 1 undergoes a prescribed modification by the automatic transmission 2, and is then output from the output shaft 3. The vehicle is equipped with an engine controller (ECU) 4 and an automatic transmission controller (ATCU) 5 for the purpose of controlling the engine 1, the automatic transmission 2, and the like on the basis of various detection values from various types of sensors, to be discussed later. The two controllers 4 and 5 are connected so as to be capable of intercommunication, and constitute a neutral control device.

The vehicle is provided with various on-board sensors such as an accelerator position sensor 6, a brake switch 7, a vehicle speed sensor 8, an acceleration sensor (G sensor) 9, a shift sensor 10, and the like.

The accelerator position sensor 6 outputs an accelerator position signal to the engine controller 4. The brake switch 7 outputs a brake switch signal to the engine controller 4 for indicating whether the brake (not shown) pedal has been depressed to apply a braking force to the wheels. The vehicle speed sensor 8 detects the driving speed of the vehicle (vehicle speed) on the basis of the rotational speed of the wheels as determined from wheel speed sensors provided to the wheels, and outputs a vehicle speed signal to the engine controller 4. The G sensor 9 detects acceleration acting on the vehicle, and outputs an acceleration signal to the engine controller 4. The shift sensor 10 detects the shift position of the automatic transmission 2, and outputs a shift position signal to the automatic transmission controller 5.

The vehicle is considered to be in the neutral state for neutral control by the neutral control device (e.g., the engine controller 4 and the automatic transmission controller 5) shown in Figure 1, when the shift position of the automatic transmission 2 is in a forward drive position, the accelerator pedal is not depressed, the vehicle is at a stop through depression of the brake pedal, and the gradient of the roadway does not exceed a prescribed angle. During neutral control by the neutral control device, the clutch (engaging element) 2a of the automatic transmission 2 that engages when the vehicle starts to move will be released, so that neutral control can be performed with the vehicle in the neutral state. The vehicle speed sensor 8 constitutes a vehicle stopped status determination unit configured to determine whether the vehicle is currently stopped. The vehicle speed sensor 8 also constitutes a driving status determination unit that determines whether the vehicle is currently being driven.

Specifically, the neutral control device will perform neutral control provided that the shift position signal from the shift sensor 10 indicates a forward drive position, that the accelerator position signal of the accelerator position sensor 6 is zero, that the brake switch signal from the brake switch 7 is ON (indicating the brake pedal is depressed), that the vehicle speed signal from the vehicle sensor 8 is a prescribed value (#0), and that the acceleration signal from the G sensor 9 indicates an acceleration that corresponds to a sloping road of prescribed angle or less. At the point in time that any of the above-described conditions for execution of neutral control is no longer met, such as the brake switch going OFF, the neutral control device will cancel neutral control.

Figure 2 is a control block diagram depicting the configuration of the acceleration detection device 11 housed in the engine controller 4 of the illustrated embodiment. The acceleration detection device 11 of the illustrated embodiment has a distance counter 12, a drift calculating unit 13, and a zero point correction unit 14. Basically, in the acceleration detection device 11, previous detected acceleration sensor output values generated every time a vehicle has traveled a prescribed distance are averaged, and correction is carried out on the basis of this averaged acceleration sensor output value. Specifically, the previous acceleration sensor output values generated when the vehicle is traveling are averaged, whereby it is possible to eliminate the effect of a slope when the vehicle is stopped. The sampling period of the acceleration sensor output values is based on distance, whereby it is possible to eliminate the effect of traffic conditions. As a result, the acceleration detection device 11 can eliminate the effects of sloping roads or traffic conditions when correcting the current acceleration sensor output value, and the precision of the acceleration detection device 11 can be improved.

The distance counter 12 is a counter that counts the travel distance of the vehicle and outputs a sampling flag (= 1) to the drift calculating unit 13 every time the vehicle travels a prescribed distance (threshold value A). The counter is reset every time the count value reaches the threshold value A, and the sampling flag is set to zero.

When the sampling flag is 1, the drift calculating unit 13 calculates the amount of drift of a G sensor 9 from a zero point on the basis of the G sensor output value and the previous value of the drift amount, and the drift amount is output to the zero point correction unit 14.

The zero point correction unit 14 is a comparator for outputting a difference value of the two input values, and the zero point correction unit subtracts the drift amount from the G sensor output value and outputs a corrected G sensor output value.

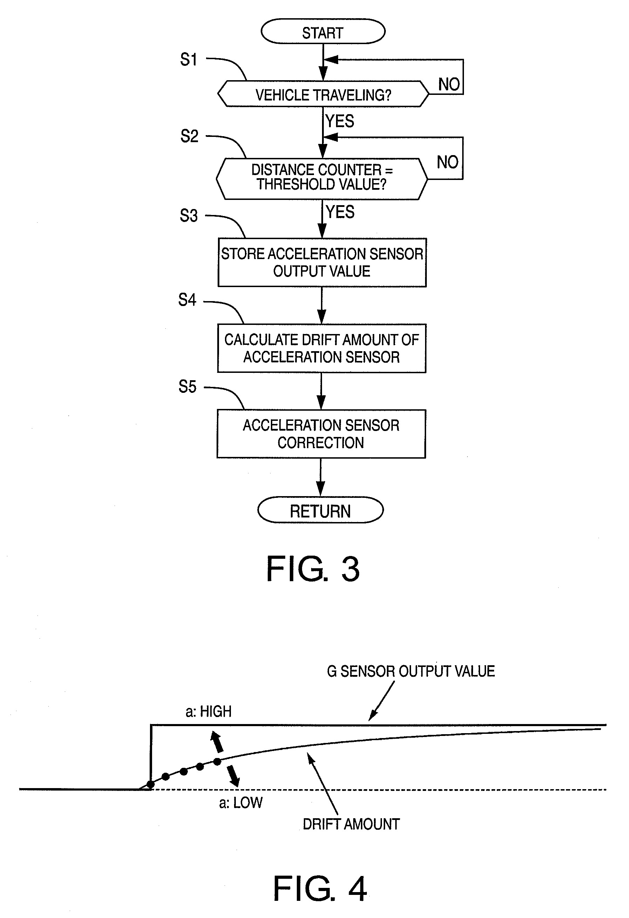

Figure 3 is a flowchart showing the flow of the zero point correction control processing carried out in the acceleration detection device 11 of the illustrated embodiment, and the steps thereof will be described below. The control processing is repeated at a prescribed calculation period.

In step S1, it is determined whether or not the vehicle is traveling on the basis of a vehicle speed signal from the vehicle speed sensor 8. If the vehicle is traveling, then the process proceeds to step S2. If the vehicle is not traveling, then step S1 is repeated.

In step S2, it is determined by the distance counter 12 whether or not the counter value has reached the threshold value A. If the threshold value A has been reached, then the process proceeds to step S3. If the threshold value has not been reached, then step S2 is repeated.

In step S3, the G sensor output value is stored in the drift calculating unit 13, and the process proceeds to step S4.

In step S4, the drift amount is calculated by the drift calculating unit 13 on the basis of the G sensor output value stored in step S3 and the previous value of the drift amount, and then the process proceeds to step S5.

In step S5, the drift amount is subtracted from the G sensor output value by the zero point correcting unit 14. Then, the corrected G sensor output value is output by the zero point correcting unit 14, and the process returns.

In the drift calculating unit 13, the drift amount is calculated as the weighted sum of the G sensor output value and the previous value of the drift amount. Specifically, the drift amount y is calculated from the following Equation (1):

$$y = (1 - a) \times y(-1) + a \times u$$

where: "u" is the current G sensor (acceleration) sensor output value,
"a" is the weighting coefficient, and
"y(-1)" is the previous drift amount.

The weighting coefficient "a" is greater than 0 and is much less than ($\ll$) 1. The weighting coefficient "a" is a constant that is set to a lower value as the threshold value A is decreases. As will be apparent to those skilled in the art from this disclosure, this weighted method is a type of "averaging" of the G sensor (acceleration) sensor output values so as to minimize the effect of any one particular detected value. Thus, the terms "average", "averaged", and "averaging" are not used in a limiting manner herein.

Figure 4 is a diagram showing the relationship between the G sensor output value and the drift amount in a case where the weighting coefficient "a" is varied. As shown in the diagram, the drift amount is a value that approaches the G sensor output value as the weighting coefficient "a" is set to a higher value.

Next, the zero point correction operation based on the G sensor output value during travel will be described.

In the acceleration sensor correction device disclosed in Japanese Laid-Open Patent Application No. 7-159438, the G sensor output value of a stopped vehicle is sampled and the drift amount is calculated. Therefore, it will not be possible to calculate a correct drift amount in instances where, for example, there are frequent stops on sloping roads, such as where the parking space of a home is on an incline, and the precision of zero point correction may therefore be poor.

On the other hand, in the acceleration detection device 11 of the illustrated embodiment, the previous G sensor output values generated while the vehicle is traveling are averaged, whereby the amount of drift from the zero point of the G sensor 9 is calculated and zero point correction is carried out using the drift amount. Therefore, it is possible to calculate a drift amount that is not affected by the slope when the vehicle is stopped, and the precision of the zero point correction can be improved.

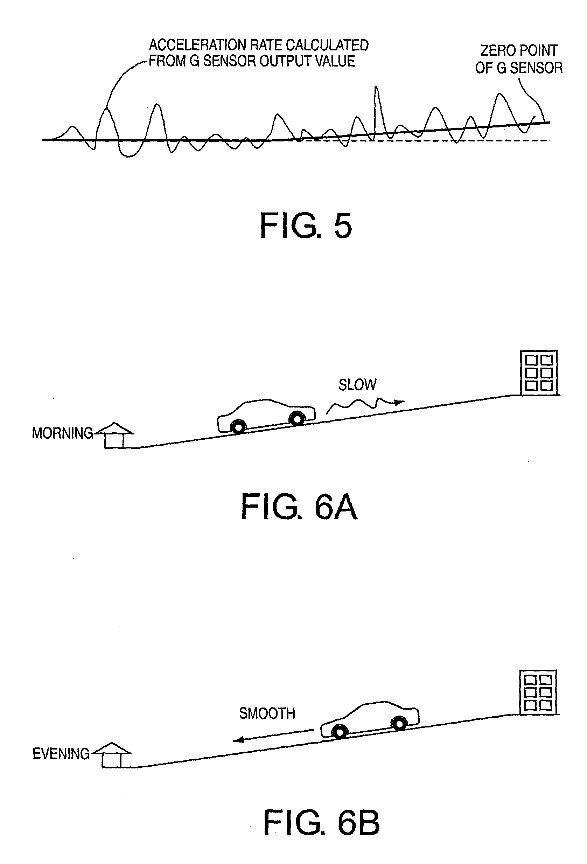

As shown in Figure 5, the vehicle will always decelerate after accelerating during normal travel, and will always travel downhill after climbing up a sloping road. Therefore, the average value of the acceleration/deceleration rate of a vehicle is zero. Based on this principle, the acceleration/deceleration rate during travel is averaged in the illustrated embodiment, whereby the amount of drift (drift error) from the zero point of the G sensor 9 is calculated, this value is subtracted from the G sensor output value, and the drift error is corrected.

In the illustrated embodiment, distance sampling rather than time sampling is used as the sampling method for the G sensor output values.

For example, when a house is at the foot of a hill, a work place is at the top of a hill, and the vehicle is only being used to commute, the vehicle always travels slowly in congested traffic during the outbound trip (Figure 6A), and can travel unimpeded with no congestion on the inbound trip (Figure 6B).

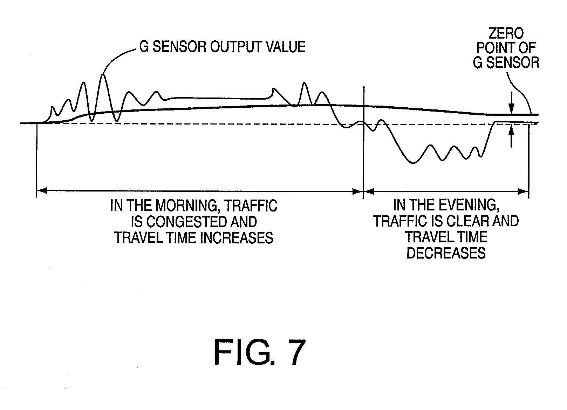

In these conditions, when a method is used in which the G sensor output values are sampled at regular time intervals, the drift amount calculated thereby is a value that is biased toward the incline of the outbound trip, as shown in Figure 7. Therefore, accurate zero point correction cannot be carried out.

By contrast, the acceleration detection device 11 of the illustrated embodiment uses distance sampling in which the drift amount is calculated once every time a prescribed distance has been traveled. Specifically, the travel distance is the same for the outbound trip and the inbound trip, regardless of the traffic conditions. Therefore, the average value of the acceleration/deceleration rate when climbing and descending equals out to be zero, and the drift amount can be accurately calculated.

In the drift calculating unit 13 in the illustrated embodiment, the drift amount is calculated as the weighted sum of the G sensor output value and the previous value of the drift amount. Therefore, the drift amount can be calculated by storing only the previous drift amounts. Specifically, since it is not necessary to save previous G sensor output values, it is possible both to reduce the storage capacity of memory or the like and to improve the computing speed.

In the illustrated embodiment, the drift amount is calculated with reference to Equation (1) in the drift calculating unit 13. It is assumed that the weighting coefficient "a" of the G sensor output value u is much less than 1, and the weighting coefficient of the G sensor output value u is set so as to be considerably less than the weighting coefficient (1 - a) of the previous value y(-1) of the drift amount.

When the weighting coefficient "a" is increased, the drift amount varies greatly according to the currently detected G sensor output value, as shown in Figure 4. Therefore, when, for example, a considerable noise component is included in the G sensor output value, the noise component is added to the drift amount, and there is a chance that the drift amount will not be calculated accurately.

Consequently, in the illustrated embodiment, the weighting coefficient "a" is set to a value that is considerably less than 1, and the effect of a single G sensor output value on the drift amount is minimized, whereby the drift amount is gradually corrected according to the travel distance, and the effect of the sensor noise or the like can be kept low.

In the illustrated embodiment, the weighting coefficient "a" is set to a smaller value as the threshold value A decreases, i.e., as the sampling distance decreases. For example, when the sampling distance is reduced to half without any change to the weighting coefficient "a", the magnitude of the effect of the G sensor output value on the drift amount increases twofold as the correction rate is doubled. Therefore, it is impossible to gradually correct the drift amount according to the travel distance.

Consequently, in the illustrated embodiment, the weighting coefficient "a" is set to a smaller value as the sampling value A decreases, whereby the magnitude of the effect of the G sensor output value on the drift amount is kept at a constant value, and the drift amount can be gradually corrected, regardless of the sampling distance.

Next, the effects will be discussed.

The acceleration detection device of the illustrated embodiment affords effects such as the following, by way of example.

(1) The acceleration detection device 11 has a drift calculating unit 13 for averaging the previous G sensor output values generated every time a vehicle travels a prescribed distance, and calculates the amount of drift from a zero point of the G sensor output value; and a zero point correcting unit 14 for correcting the G sensor output value for the zero point on the basis of the drift amount. It is thereby possible to eliminate the effect of sloping roads and traffic conditions, and it is possible to achieve more accurate zero point correction.

(2) The drift calculating unit 13 calculates the drift amount as a weighted sum of the G sensor output value and the previous value of the drift amount. Therefore, it is not necessary to save the previous G sensor output values, and it is possible both to reduce the storage capacity of memory or the like and to improve the computing speed.

(3) The drift calculating unit 13 sets the weighting coefficient "a" of the G sensor output value to a value that is considerably less than the weighting coefficient (1 - a) of the previous value of the drift amount. It is therefore possible to gradually correct the drift amount according to the travel distance, and the effect of sensor noise and the like can be kept low.

(4) The drift calculating unit 13 calculates the drift amount y on the basis of Equation (1), where u is the G sensor output value, a is the weighting coefficient, and y(-1) is the previous value of the drift amount. It is therefore possible to gradually correct the drift amount according to the travel distance, and the effect of sensor noise or the like can be kept low.

(5) The drift calculating unit 13 sets the weighting coefficient "a" to a lower value as the prescribed distance decreases. Therefore, the magnitude of the effect of the G sensor output value on the drift amount is kept at a constant value, and the drift amount can be gradually corrected, regardless of the sampling distance.

(6) The invention provides a method of correcting the drift error of a G sensor for correcting the error that a G sensor output value from the G sensor 9 mounted in a vehicle has in relation to the zero point, wherein the method comprises averaging previous G sensor output values generated every time the vehicle travels a prescribed distance, calculating the amount of drift from the zero point of the G sensor output value, and corrects the G sensor output value for the zero point on the basis of the drift amount. It is thereby possible to eliminate the effects of sloping roads and traffic conditions, and to achieve more accurate zero point correction.

For example, whereas the illustrated embodiment was described with reference to a case in which the acceleration detection device of the invention was used as roadway gradient detecting unit in a neutral control device, the acceleration detection device of the invention can also be appropriately employed in other vehicle control devices as a device for the zero point correction of acceleration sensors mounted on vehicles. The example was also described with reference to a case in which the current acceleration sensor output value was corrected for the zero point, but the present invention is not limited to this example and can also envision performing a correction by adding or subtracting the drift amount to or from an acceleration sensor output value. Furthermore, in the example, the drift amount was calculated as a weighted sum of the current acceleration sensor output value and the previous drift amount, and the acceleration sensor output values were averaged. However, it is also possible to use a method for averaging the acceleration sensor output values in which a numerical value, obtained by adding an acceleration output signal generated every time a prescribed distance has been traveled, is divided by a sampling number, and the acceleration sensor output value is averaged.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As will be apparent to those skilled in the art from this disclosure, the terms "average", "averaged", "averaging", and the like is not limited to adding a sampling of detected values and dividing the total value by the sampling number. Rather, the terms "average", "averaged", "averaging", and the like include other calculation in which the detected values are weighted so as to minimize the effect of any one particular detected value.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

This application claims priority from Japanese Patent Application No. 2006-330140, filed 7th December 2006, the contents of which are expressly incorporated herein by reference.

**Claims**

1. An apparatus for detecting acceleration of a vehicle, comprising:

       calculation means for calculating an averaged acceleration sensor output value every time the vehicle travels a prescribed distance based on detected acceleration sensor output values, and correction means for correcting a current acceleration sensor output value based on the averaged acceleration sensor output value.

2. An apparatus as claimed in claim 1, wherein the calculation means comprises a drift amount calculation unit in which the averaged acceleration sensor output value corresponds to a drift amount of the detected acceleration sensor output values from a zero point.

3. An apparatus as claimed in claim 2, wherein the correction means is arranged to correct the current acceleration sensor output value relative to the zero point based on the drift amount.

4. An apparatus as claimed in claim 2 or claim 3, wherein the drift amount calculation unit is arranged to calculate the drift amount as a weighted sum of the current acceleration sensor output value and the previously calculated drift amount.

5. An apparatus as claimed in claim 4, wherein the drift amount calculation unit is arranged to set a weighting coefficient of the current acceleration sensor output value to a value that is less than the weighting coefficient of a previously calculated value of the drift amount.

6. An apparatus as claimed in claim 4 or claim 5, wherein the drift amount calculation unit is arranged to calculate the drift amount as follows:

$$y = (1 - a) \times y(-1) + a \times u$$

where:

value "u" corresponds to the current acceleration sensor output value;
value "a" corresponds to a weighting coefficient with $a \ll 1$; and
value "y(-1)" corresponds to the previous value of the drift amount.

7. An apparatus as claimed in claim 6, wherein the drift amount calculation unit is arranged to set the weighting coefficient to a smaller value as the prescribed distance decreases.

8. An method for detecting acceleration, comprising:

calculating an averaged acceleration sensor output value every time the vehicle travels a prescribed distance based on detected acceleration sensor output values; and
correcting a current acceleration sensor output value based on the averaged acceleration sensor output value.

9. A vehicle having an apparatus or adapted to use a method as claimed in any preceding claim.

ENGINE

AUTOMATIC
TRANSMISSION

ACCELERATOR POSITION
SENSOR

BRAKE SWITCH

VEHICLE SPEED SENSOR

G SENSOR

ECU

ATCU

SHIFT SENSOR

## FIG. 1

TRAVEL
DISTANCE

DISTANCE COUNTER

SAMPLING FLAG

G SENSOR

G SENSOR
OUTPUT
VALUE

DRIFT AMOUNT
CALCULATING UNIT

DRIFT
AMOUNT

CORRECTED G
SENSOR
OUTPUT VALUE

## FIG. 2

8

S1 — VEHICLE TRAVELING? — NO

YES

S2 — DISTANCE COUNTER =
THRESHOLD VALUE? — NO

YES

S3 — STORE ACCELERATION SENSOR
OUTPUT VALUE

S4 — CALCULATE DRIFT AMOUNT OF
ACCELERATION SENSOR

S5 — ACCELERATION SENSOR
CORRECTION

START

RETURN

FIG. 3

G SENSOR OUTPUT VALUE

a: HIGH

a: LOW

DRIFT AMOUNT

FIG. 4

ACCELERATION RATE CALCULATED
FROM G SENSOR OUTPUT VALUE

ZERO POINT
OF G SENSOR

## FIG. 5

SLOW

MORNING

## FIG. 6A

SMOOTH

EVENING

## FIG. 6B

G SENSOR OUTPUT VALUE

ZERO
POINT OF
G SENSOR

IN THE MORNING, TRAFFIC
IS CONGESTED AND
TRAVEL TIME INCREASES

IN THE EVENING,
TRAFFIC IS CLEAR AND
TRAVEL TIME
DECREASES

# FIG. 7

G SENSOR OUTPUT VALUE

ZERO
POINT OF
G SENSOR

MORNING (CONGESTION)

EVENING (TRAFFIC IS CLEAR)

DISTANCE IS THE SAME WHEN TRAFFIC
IS CONGESTED OR CLEAR

FIG. 8

**European Patent Office**

## EUROPEAN SEARCH REPORT

Application Number

EP 07 12 2060

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/101031 A (CONTINENTAL TEVES AG & CO OHG [DE]; HERBST RALF [DE]; NIEPELT MATHIAS) 27 October 2005 (2005-10-27) * page 2, paragraph 4 - page 4, paragraph 3 * * page 7, paragraph 4 * ----- | 1-9 | INV. G01P21/00 B60W40/10 B60W40/08 |
| | | | TECHNICAL FIELDS SEARCHED (IPC) |
| | | | G01P B60W |

The present search report has been drawn up for all claims

| Place of search | Date of completion of the search | Examiner |
|---|---|---|
| The Hague | 10 April 2008 | Pflugfelder, Günther |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 07 12 2060

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2008

| Patent document cited in search report | Publication date | Patent family member(s) | Publication date |
|---|---|---|---|
| WO 2005101031 A | 27-10-2005 | DE 102005003292 A1<br>EP 1738182 A1<br>US 2007208524 A1 | 03-11-2005<br>03-01-2007<br>06-09-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7159438 A

- JP 2006330140 A